# EUROPÄISCHE PATENTSCHRIFT

(11) **EP 3 121 051 B1**
(45) Veröffentlichungstag und Bekanntmachung des Hinweises auf die Patenterteilung: **14.03.2018**
(21) Anmeldenummer: 15178168.9
(22) Anmeldetag: 24.07.2015
(51) Int. Cl.: B60K 15/067, B60K 15/07, F17C 13/08, B60K 15/01

(54) **TANKSYSTEM FÜR EIN FAHRZEUG**
TANK SYSTEM FOR A VEHICLE
RESERVOIR DE VEHICULE

(43) Veröffentlichungstag der Anmeldung: 25.01.2017
(73) Patentinhaber: SALZBURGER ALUMINIUM AKTIENGESELLSCHAFT, 5651 Lend (AT)
(72) Erfinder: LIND, Christoph, 5671 Bruck (AT)
(74) Vertreter: Weiser, Andreas

(56) Entgegenhaltungen:
- WO-A1-2004/082976
- DE-A1- 10 341 204
- DE-U1- 9 010 169
- US-A- 2 327 235
- US-A1- 2010 252 353

## Beschreibung

Die vorliegende Erfindung betrifft ein Tanksystem für ein Fahrzeug, umfassend einen Tank für Betriebsstoffe, der einen allgemein-zylindrischen Mantel mit einer Mantelachse aufweist.

Derartige Betriebstofftanks werden in der Regel seitlich am Fahrzeugchassis bzw. -rahmen von Lastkraftfahrzeugen oder auch direkt hinter der Fahrerkabine montiert und insbesondere zur Lagerung von herkömmlichem Treibstoff, aber auch von verflüssigtem Erdgas (liquefied natural gas, LNG), komprimiertem Erdgas (compressed natural gas, CNG) oder verflüssigtem Wasserstoff verwendet.

Die AT 10 978 U1 zeigt die Montage von Diesel-Betriebstoff tanks am Fahrzeugrahmen. Dazu werden Tragkonsolen verwendet, die am Fahrzeugrahmen angeschraubt werden, um darauf den Betriebsstofftank an seinem Mantel abzustützen und mit über seinen Mantel geführten Spanngurten festzuzurren. Der Oberbegriff des Anspruchs 1 ist aus DE 103 41 204 bekannt.

Bei LNG- oder CNG-Betriebsstofftanks werden häufig Armaturen, z.B. eine Betankungsarmatur oder eine Ventleitung zur Entlüftung des Tanks, an der Mantelfläche angebracht. Bei solchen Tanks ist die Anbringung von Spanngurten jedoch äußerst schwierig, da ein Teil der Mantelfläche bereits von den Armaturen belegt ist. Die Spanngurte müssen deshalb neben den Armaturen um den Mantel herum verlaufen, was die Positionierungsmöglichkeiten der Tragkonsolen einschränkt und auch die Montage der Spanngurte erschwert.

Die Erfindung setzt sich zum Ziel, ein Tanksystem für ein Fahrzeug zu schaffen, bei dem der Tank in möglichst vielen Positionen sowohl mit Spanngurten am Fahrzeug montiert werden kann als auch Armaturen an der Mantelfläche vorgesehen werden können.

Dieses Ziel wird mit einem Tanksystem der einleitend genannten Art erreicht, das sich gemäß der Erfindung dadurch auszeichnet, dass es ferner umfasst:
ein Gehäuse, das zumindest eine an den Tank angeschlossene Armatur zumindest teilweise beherbergt und sich zumindest teilweise in einem Zwickel befindet, der zwischen dem Mantel und dem kleinstmöglichen, den Mantel umschreibenden, gedachten Quader eingeschlossen ist, und
zumindest eine am Fahrzeug montierbare Tragkonsole, auf welcher der Tank mittels eines Gurtes festspannbar ist, wobei der Gurt im festgespannten Zustand des Tanks über das Gehäuse geführt ist.

Dadurch wird erstmals eine Lösung geschaffen, bei der die Armaturen unter einem Gehäuse geschützt sind, welches gleichzeitig zur darauf aufliegenden Abstützung der Spanngurte im festgespannten Zustand des Tanks ausgenützt wird. So wird eine platzsparende Anordnung mit unkomplizierter Montage geschaffen, da sich die Armaturen und die Spannbänder nicht mehr gegenseitig blockieren. Das Gehäuse schützt die Armaturen nicht nur vor äußeren Einflüssen wie Witterung oder Steinschlag, sondern auch vor der Krafteinwirkung der Gurte. Der Tank kann zusammen mit den Armaturen und deren Gehäuse vorgefertigt vertrieben werden und bei der Montage können die Tragkonsolen und Spannbänder an jeder beliebigen Stelle angebracht werden, d.h. es braucht nicht darauf geachtet zu werden, welcher Tank-Typ mit vormontierten Armaturen mit welcher Tragkonsolenverteilung übereinstimmt, da der Abstand zwischen den Tragkonsolen frei gewählt werden kann.

In einer ersten bevorzugten Ausführungsform der Erfindung ist das Gehäuse eine Abdeckung. Unter einer Abdeckung wird jeglicher Bauteil verstanden, der die Armaturen vor äußeren Einflüssen schützen kann. Die Abdeckung kann z.B. ein einfaches Abdeckblech sein, so dass die Armaturen zwischen Mantel und Abdeckblech eingeschlossen sind, oder ein geschlossener oder an seinen Stirnseiten offener Hohlkörper, der die Armaturen umschließt und am Mantel flächig anliegt. Abdeckungen haben den Vorteil, dass die leichtgewichtig und kostengünstig sind. Zudem kann eine Abdeckung in Form eines Abdeckblechs leicht vom Tank abgenommen werden, um die Armaturen zu warten.

In einer zweiten bevorzugten Ausführungsform der Erfindung ist das Gehäuse ein Ventilblock. Ein Ventilblock ist ein solider Körper, z.B. aus Aluminium, mit - sich gegebenenfalls zur Verbindung kreuzenden - Bohrungen bzw. Sackbohrungen, in welche die Armaturen in Form von z.B. Patronenventilen oder Anschlussstutzen eingeschraubt werden können. Ein solcher Ventilblock stellt somit sowohl eine robuste Auflage für den Spanngurt als auch eine universelle Verbindung bzw. Verschaltung für die Armaturen da, die darin - zumindest teilweise - beherbergt sind.

In einer erfindungsgemäßen Variante ist der genannte Zwickel jener Seite des Tanks abgewandt, die zur Montage an der Tragkonsole ausgebildet ist. Dies schafft ein Tanksystem, bei dem die Armaturen besonders gut zugänglich sind.

In einer weiteren Variante liegt der genannte Zwickel in der Montagestellung der Vorrichtung auf der Oberseite des Tanks. Dadurch sind die Armaturen besser zugänglich als bei anderen Lösungen und das Gehäuse bzw. dessen Armaturen sind Steinschlag während der Fahrt des Fahrzeugs weniger ausgeliefert.

Bevorzugt ist zumindest eine Armatur durch eine Öffnung in dem Gehäuse zugänglich. Dies ermöglicht, dass die Armaturen auch ohne Demontieren der Tragkonsolen bzw. ohne Abnehmen des Gehäuses zugänglich sind. Optional können die Öffnungen mittels Deckeln verschlossen werden, um die Armaturen besser zu schützen.

Um den Kraftfluss von den Spannbändern über die Abdeckung auf den Mantel des Tanks zu verbessern und einen bündigen Verlauf des Spanngurtes an dem Gehäuse bzw. am Übergang Mantel-Gehäuse zu ermöglichen, hat das Gehäuse, gesehen in Richtung der Mantelachse, bevorzugt eine sichelförmige oder abgerundet L-förmige Kontur.

In jener Ausführungsform der Erfindung, in welcher das Gehäuse eine Abdeckung ist, kann bevorzugt zumindest eine Stützeinrichtung zwischen dem Mantel und der Abdeckung vorgesehen werden. Dadurch kann der Hohlraum zwischen Abdeckung und Mantel überbrückt und so die Abdeckung ausgesteift werden. Besonders bevorzugt ist dabei die Stützeinrichtung an einer Seite an die Krümmung des Mantels und an der anderen Seite an die Krümmung der Abdeckung angepasst, um die von den Spannbändern ausgeübten Kräfte besser auf den Mantel abzuleiten. Die Stützeinrichtungen können z.B. als kostengünstige Spritzgussteile aus Kunststoff ausgeführt werden.

Zum Schutz der Armaturen befindet sich jede Stützeinrichtung bevorzugt in einem Bereich, über den der jeweilige Gurt im festgespannten Zustand des Tanks geführt ist. Alternativ oder zusätzlich können Stützeinrichtungen am Anfang und am Ende der Abdeckung liegen.

Gemäß einem weiteren bevorzugten Merkmal der Erfindung kann die Stützeinrichtung mit zumindest einer Durchführung ausgestattet sein, um eine oder mehrere Anschlussleitungen für die Armaturen passieren zu lassen.

Die Stützeinrichtung kann aber auch durch einen Ventilblock der zuvor beschriebenen Art gebildet werden. Dadurch können die Vorteile des Ventilblocks, der die Armaturen in kompakter Weise aufnimmt, mit den Vorteilen der Abdeckung, die hier sowohl die Armaturen als auch den Ventilblock beherbergt, vereint werden.

Die Erfindung wird nachstehend anhand von in den beigeschlossenen Zeichnungen dargestellten Ausführungsbeispielen näher erläutert. In den Zeichnungen zeigen:
die Fig. 1 bis 3 das Tanksystem der Erfindung in einer Perspektivansicht (Fig. 1), einer Draufsicht (Fig. 2) und einer Stirnansicht (Fig. 3);
Fig. 4 das Tanksystems der Fig. 1 bis 3 in einer ausschnittsweisen aufgebrochenen Perspektivansicht;
Fig. 5 eine Variante des erfindungsgemäßen Tanksystems in einer Perspektivansicht;
die Fig. 6 - 9 vier weitere alternative Ausführungsformen des erfindungsgemäßen Tanksystems in schematischen Seitenansichten; und
die Fig. 10 - 12 drei weitere Varianten des erfindungsgemäßen Tanksystems, die jeweils mit jeder der Ausführungsformen der Fig. 5 - 8 kombinierbar sind, in schematischen Seitenansichten.

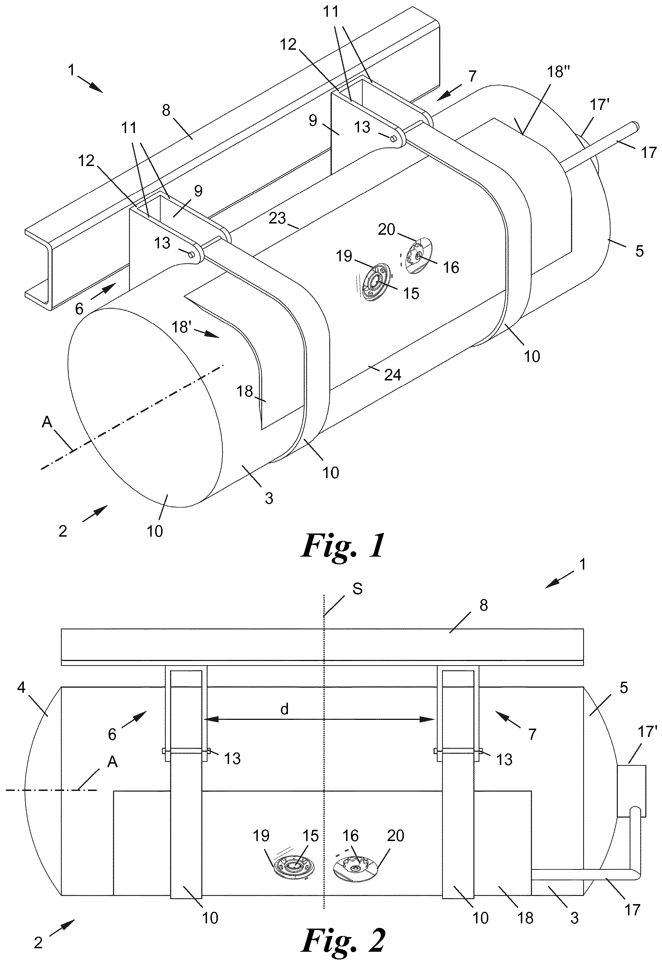

Gemäß den Fig. 1 bis 3 umfasst ein Tanksystem 1 einen Tank 2, der aus einem Mantel 3 und zwei - in diesem Beispiel kalottenförmigen - Endkappen 4, 5 zusammengesetzt ist. Der Tank 2 ist mittels zweier Tragkonsolen 6, 7 an einem Rahmen 8 eines (nicht weiter dargestellten) Fahrzeugs montiert, z.B. seitlich am Fahrzeugchassis oder direkt hinter der Fahrerkabine. Das Fahrzeug ist beispielsweise ein LKW und der Tank 2 für einen Betriebsstoff des Fahrzeugs bestimmt, beispielsweise Benzin, Diesel, LNG (liquefied natural gas), CNG (compressed natural gas), verflüssigter Wasserstoff, Katalysatorlösungen wie AdBlue®, od.dgl.

Der Mantel 3 hat eine Mantelachse A, die im Wesentlichen parallel zum Fahrzeugrahmen 8 und in der Regel parallel oder normal zur Fahrtrichtung des Fahrzeugs ausgerichtet ist, auch wenn dies nicht zwingend ist. Der Mantel 3 ist in den Fig. 1 -4 zylindrisch dargestellt, kann in weiteren Ausführungsformen jedoch auch allgemein-zylindrisch sein. Unter dem Begriff "allgemein-zylindrisch" wird ein Zylinder mit einer beliebigen Grund- bzw. Querschnittsfläche verstanden, sei sie kreisrund, oval, rechteckig, quadratisch oder quadratisch mit abgerundeten Ecken oder sonstwie geformt. So kann der Mantel 3 in einer Ausführungsform insbesondere auch einen D-förmigen Querschnitt haben.

Die Tragkonsolen 6, 7 stützen den Tank am Mantel 3 ab, d.h. umgreifen den Mantel 3 zumindest teilweise. Jede Tragkonsole 6, 7 weist dabei beispielsweise einen sichel- oder L-förmigen Arm 9 auf, auf welchem der Mantel 3 des Tanks 2 mittels eines ein- oder mehrteiligen Gurtes, z.B. Spanngurtes, 10 festgespannt ist. In dem gezeigten Beispiel ist der Arm 9 aus zwei in ihrer Kontur an den Umfang des Mantels 3 angepassten Seitenplatten 11 aufgebaut, die mittels eines Stegblechs 12 verbunden sind. Zusätzlich kann ein weiteres Stegblech (nicht gezeigt) an der dem Mantel 3 zugewandten Seite des Arms 9 vorgesehen sein.

Der Spanngurt 10 greift an Halterungen 13, 14 des Arms 9 an und ist ganz oder in Teilen aus einem elastisch dämpfenden Material gefertigt. Unter elastisch dämpfenden Materialien werden Materialien verstanden, die dazu in der Lage sind, den Tank 2 elastisch dämpfend an die Tragkonsolen 6, 7 zu koppeln. Mögliche Ausführungsformen sind beispielsweise Textil-, Kautschuk- oder Kunststoffmaterialien. So kann der Spanngurt 10 beispielsweise als ein Stahlband mit einer elastischen Dämpfungsunterlage, z.B. einer Gummiunterlage, ausgeführt sein. Alternativ oder zusätzlich können die Halterungen 13, 14 elastische Dämpfungselemente, z.B. Gummibuchsen, und/oder der Spanngurt 10 eine elastische Schnalle bzw. Spannschnalle enthalten, in welchem Fall der Spanngurt 10 auch aus einem nicht-elastischen Material, z.B. Stahl, gefertigt sein kann.

Armaturen, wie eine Ventleitung 15, ein Handventil 16, ein Befüllstutzen (nicht gezeigt) und/oder ein Wärmetauscher (nicht gezeigt), sind über zumindest eine Anschlussleitung 17 z.B. mittels eines Flanschs 17' am Tank 2 (oder an einem anderen Tank) angeschlossen und entlang des Mantels 3 angeordnet.

Der Flansch 17' kann sich beispielsweise an der Endkappe 5 befinden, wie in den Fig. 1 - 4 gezeigt, oder auch direkt an der Mantelfläche 3, beispielsweise in der Mitte der Mantelfläche (nicht gezeigt). In letzteren Fällen kann die Anschlussleitung 17 kürzer ausfallen und braucht z.B. nicht unter den Spanngurten 10 zur Endkappe 4, 5 geführt zu werden.

Die Armaturen 15, 16 - und zumindest Teile der Anschlussleitung(en) 17 - sind von einer Abdeckung 18 verdeckt. Die Abdeckung 18 stellt hier eine erste Ausführungsform eines Gehäuses dar, welches die Armaturen 15, 16 - zumindest teilweise - beherbergt. Die Abdeckung 18 ist z.B. aus Metall oder Kunststoff gefertigt und kann ein gebogenes Abdeckblech sein, das somit - gemeinsam mit dem Mantel 3 - ein an seinen Stirnseiten 18', 18" offenes Gehäuse für die Armaturen 15, 16 bildet. Alternativ kann die Abdeckung 18 an ihren Stirnseiten 18', 18" Stirnwände haben. Die Abdeckung 18 kann aber auch ein stirnseitig offener oder allseitig geschlossener Hohlkörper sein, der sichelförmig an der Außenseite des Mantels 3 anliegt und die Armaturen 15, 16 beherbergt.

Die Armaturen 15, 16 können dabei vollständig unter der Abdeckung 18 liegen und optional über Öffnungen 19, 20 in der Abdeckung 18 zugänglich sein. Die Öffnungen 19, 20 können mit Deckeln (nicht gezeigt) verschlossen werden. Falls gewünscht, können die Armaturen 15, 16 aber auch teilweise aus den Öffnungen 19, 20 herausragen.

Die Abdeckung 18 ist in Richtung der Mantelachse A zumindest so lange wie der Abstand d zwischen den Tragkonsolen 6, 7 plus etwa deren Breite, kann aber auch zumindest so lange wie der Mantel 3 oder noch länger sein, um beispielsweise an Abdeckungen ("Shrouds") der Endkappen 4, 5 anzuschließen. Bevorzugt ist die Abdeckung 18 mittig auf dem Mantel 3 angebracht, d.h. um jene zur Mantelachse A normale Symmetrieebene S symmetrisch, um die auch der Mantel 3 symmetrisch ist.

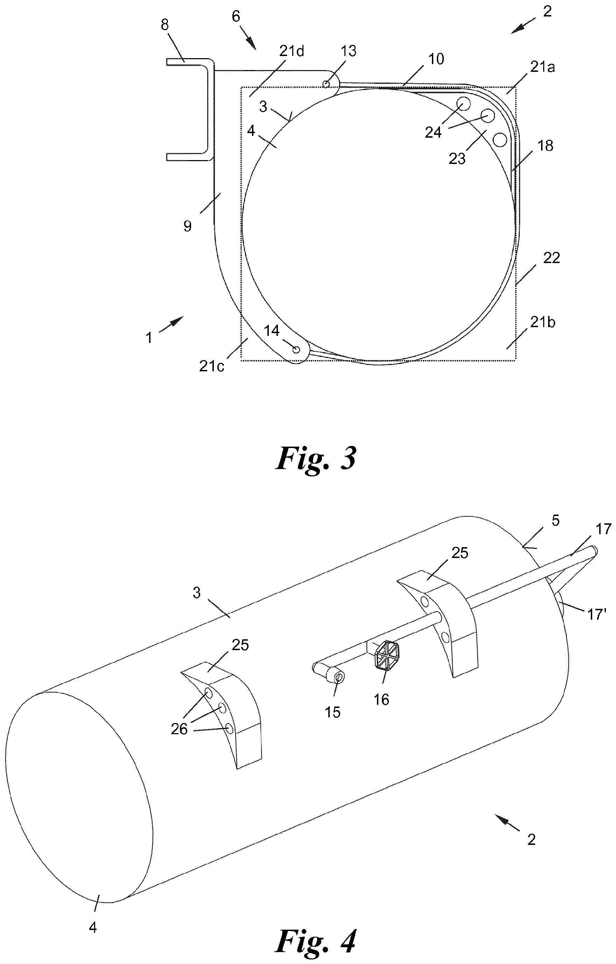

Die Abdeckung 18 und die Armaturen 15, 16 befinden sich dabei zumindest teilweise in einem Zwischenraum bzw. Zwickel 21a ("Mantelzwickel"), der zwischen dem Mantel 3 und einem kleinstmöglichen, den Mantel 3 umschreibenden, gedachten Quader 22 eingeschlossen ist. Fig. 3 zeigt, dass sich der genannte Zwickel 21a in der Montagestellung des Tanksystems 1 auf der Oberseite des Tanks 2 befindet und jener Seite des Tanks 2 abgewandt ist, die zur Montage an den Tragkonsolen 6, 7 des Rahmens 8 ausgebildet ist. Alternativ kann sich die Abdeckung 18 in einem der drei anderen Mantelzwickel 21b, 21c, 21d befinden.

Wie in den Fig. 1 - 3 gezeigt, sind die Spanngurte im festgespannten Zustand des Tanks 2 über die Abdeckung 18 geführt, d.h. liegen an dieser an. Die Abdeckung 18 schützt die Armaturen 15, 16 und die Anschlussleitung 17 so gleichzeitig vor äußeren Einflüssen und vor der Krafteinwirkung der Spanngurte 10. Durch die weitgehende Gleichförmigkeit der Abdeckung 18 auf ihrer Außenseite in Richtung der Achse A kann der Abstand d zwischen den Tragkonsolen 6, 7 am Rahmen 8 frei gewählt werden.

Damit die Spanngurte 10 möglichst spannungsfrei anliegen, hat die Abdeckung 18, gesehen in Richtung der Mantelachse A, bevorzugt - dies ist nicht zwingend - eine sichelförmige oder abgerundet L-förmige Kontur. Zudem können die am Tank 2 anliegenden Enden 23, 24 der Abdeckung 18 abgefast sei, um einen im Wesentlichen bündigen Übergang der Abdeckung 18 zum Mantel 3 zu gewährleisten.

Fig. 4 zeigt den Tank 2 bei abgenommener Abdeckung 18. Wie ersichtlich, können unter der Abdeckung 18 in den Bereichen der Spanngurte 10 jeweils Stützeinrichtungen 25, z.B. Spritzguss-Kunststoffteile oder Metallträger in Form von Brücken, Stegen, Spanten od.dgl., angeordnet werden, um die Abdeckung 18 auszusteifen. Die Stützeinrichtungen 25 sind bevorzugt etwa so breit wie die Spanngurte 10 und auf ihrer einen Seite an die Krümmung des Mantels 3 und auf ihrer anderen Seite an die Krümmung der Abdeckung 18 angepasst. Die Stützeinrichtungen 25 können mit Durchführungen 26, z.B. Rohrdurchführungen, ausgestattet sein, um das Passieren der Anschlussleitung(en) 17 zu ermöglichen. Insbesondere kann die Stützeinrichtung 25 ein Ventilblock 27 sein, der z.B. wie unten beschrieben ausgeführt werden kann.

An beiden Stirnebenen der Abdeckung 18 können weitere Stützeinrichtungen 25 oder Seitenplatten zum stirnseitigen Abschließen der Abdeckung 18 vorgesehen werden. Optional kann der Raum zwischen Mantel 3 und Abdeckung 18 zur Versteifung der Abdeckung 18 auch mit einem Kunststoffschaum ausgeschäumt werden.

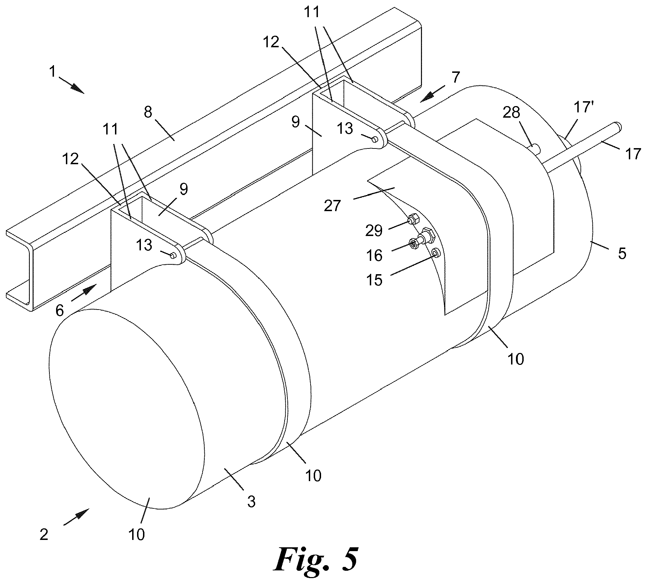

Fig. 5 zeigt eine Ausführungsform, bei der anstatt der Abdeckung 18 ein Ventilblock 27 als Gehäuse für die Armaturen eingesetzt wird. Der Ventilblock 27 ist beispielsweise ein solider Aluminiumblock mit Bohrungen und/oder Sackbohrungen, die sich je nach Anforderungen auch kreuzen können, um sie miteinander zu verbinden. In die Bohrungen sind die Armaturen 15, 16, die Anschlussleitung(en) 17 und gegebenenfalls weitere Anschlussstutzen 28 und/oder Patronenventile 29 eingesetzt, z.B. eingeschraubt, so dass sie im Ventilblock 27 zumindest teilweise beherbergt sind.

Alles hier über ein Gehäuse in Form der Abdeckung 18 Gesagte trifft in gleicher Weise auf ein Gehäuse in Form des Ventilblocks 27 zu, insbesondere betreffend dessen Form, Abmessungen und Lage auf dem Mantel 3.

Auch hier ist der Spanngurt 10 im festgespannten Zustand des Tanks 2 über den Ventilblock 27 geführt. Wie in Fig. 5 gezeigt, kann ein zweiter Spanngurt 10 lediglich über den Mantel 3 geführt sein, wenn der Ventilblock 27 kürzer ausgeführt ist. Alternativ könnten auch zwei oder mehr als zwei Gurte 10 über den Ventilblock 27 geführt sein, wenn dieser eine entsprechende Länge hat.

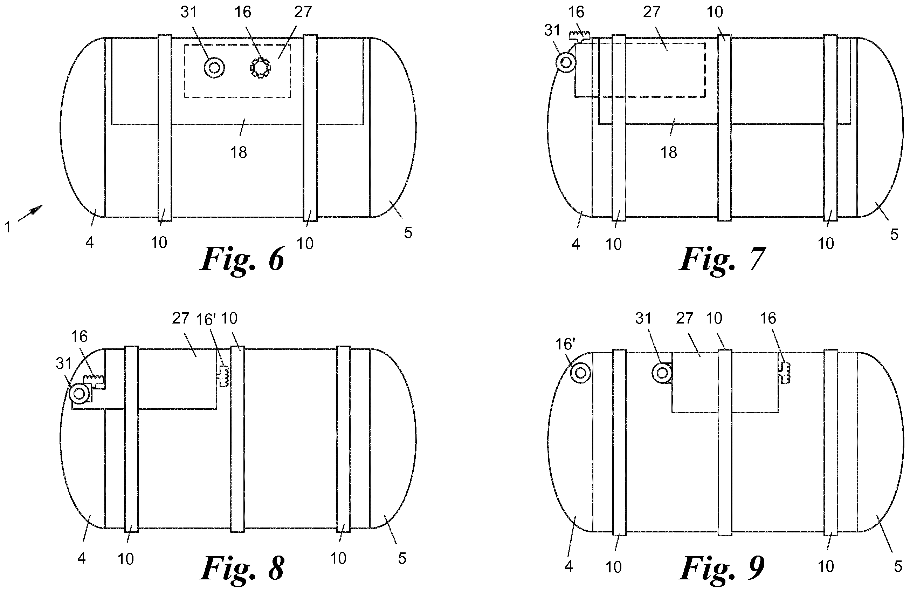

Die Fig. 6 - 9 zeigen einige mögliche Ausführungsformen betreffend die Positionierung und Kombination der Abdeckung 18 und des Ventilblocks 27 bezüglich des Mantels 3. In den Fig. 6 und 7 wird ein Ventilblock 27 unter einer als Gehäuse dienenden Abdeckung 18 verwendet, in den Fig. 8 und 9 ein als Gehäuse dienender Ventilblock 27 anstelle der Abdeckung 18.

Aus Fig. 6 kann ersehen werden, dass sich der Ventilblock 27 auch unter der Abdeckung 18 befinden kann, und zwar zwischen zwei Spannbändern, um den Ventilblock 27 spannungsfrei zu lagern. Ein Handventil 16 und eine Betankungskupplung 31 sind so in der Mitte des Tanks 2 zugänglich.

Gemäß Fig. 7 kann der Ventilblock 27 unter der Abdeckung 18 in jenem Bereich liegen, in dem sich der Gurt 10 im festgespannten Zustand des Tanks 2 befindet. Insbesondere kann Fig. 7 auch entnommen werden, dass mehr als zwei Gurte 10 eingesetzt werden können. Eine solche Stabilisierung mit mehr als zwei Gurten 10 kann auch in allen vorgenannten Ausführungsformen der Fig. 1 - 6 eingesetzt werden. Zudem können unter den zwei rechten Gurten 10 in Fig. 7 Stützeinrichtungen 25 wie oben beschrieben zur Aussteifung der Abdeckung 18 eingesetzt werden. Das Handventil 16 und die Betankungskupplung 31 sind hier an einer Stirnseite des Tanks 2, z.B. an der Endkappe 4, montiert.

Fig. 8 zeigt eine Ausführungsform ähnlich jener der Fig. 5, wobei hier jedoch das Handventil 16 und die Betankungskupplung 31 an der Endkappe 4 zugänglich sind. Zudem kann eine weitere Armatur, z.B. ein Handventil 16', zusätzlich an der Mitte des Tanks 2 freiliegen.

Fig. 9 offenbart einen in der Mitte des Mantels 3 angebrachten Ventilblock 27, der unter einem mittleren Gurt 10 befestigt ist. Das Handventil 16 und eine Betankungskupplung 31 sind an je zwei verschiedenen Seiten des Ventilblocks 27 zugänglich. Zusätzlich ist eine weitere Armatur 16' an der Endkappe 4 montiert.

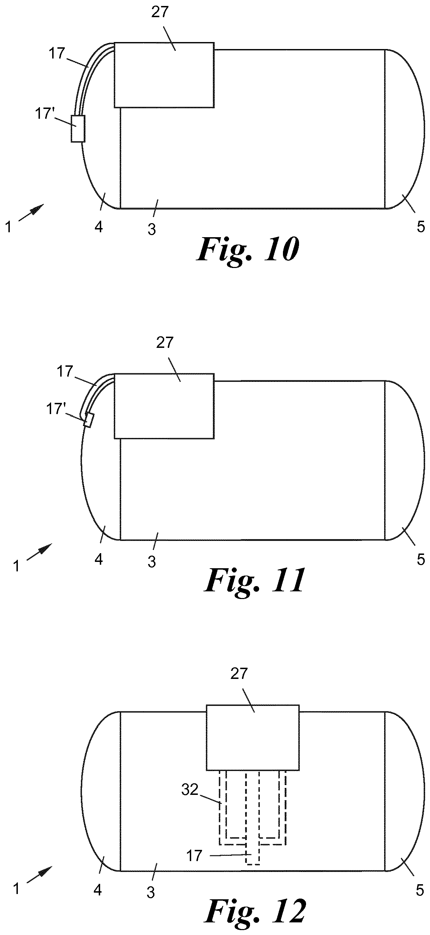

In den Fig. 10 - 12 sind verschiedene Varianten der Anbringung der Anschlussleitung(en) 17 an den Tank 2 gezeigt. Jede dieser drei Varianten ist mit den Ausführungsformen der Fig. 1 - 9 kombinierbar, d.h. die Positionierung der Abdeckung 18 bzw. des Ventilblocks 27 ist unabhängig von der Anbindung der Anschlussleitung(en) 17, die bei Bedarf sowohl über als auch unter den Gurten 10 verlaufen können.

In Fig. 10 ist gezeigt, wie die Anschlussleitung 17 an einem Flansch 17' anschließt, der sich in der Mitte der Endkappe 4 befindet. Die Anschlussleitung(en) 17 können sich wie gezeigt außerhalb des Mantelzwickels oder auch innerhalb des Mantelzwickels befinden.

Gemäß Fig. 11 kann sich der Flansch 17' auch dezentral an der Endkappe 4, d.h. nicht an deren Scheitelpunkt, befinden, um so die Länge der Anschlussleitung(en) 17 zu verringern.

Aus Fig. 12 ist ersichtlich, dass der Tank 2 optional eine vom Mantel 3 ausgehende bzw. diesen durchsetzende Einschubeinrichtung 32 für Einschubelemente wie ein Heizelement und/oder einen Füllstandssensor aufweisen kann. Die Anschlussleitung(en) 17 sind hier über die gezeigte Einschubeinrichtung 32 - oder über einen Flansch 17' am Mantel 3, wenn die Einschubeinrichtung 32 entfällt - in den Tank 2 geführt.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Tanksystem für ein Fahrzeug, umfassend
einen Tank (2) für Betriebsstoffe, der einen allgemein-zylindrischen Mantel (3) mit einer Mantelachse (A) aufweist, und
zumindest eine am Fahrzeug montierbare Tragkonsole (6, 7), auf welcher der Tank (2) mittels eines Gurtes (10) festspannbar ist, **gekennzeichnet durch**
ein Gehäuse (18, 27), das zumindest eine an den Tank (2) angeschlossene Armatur (15, 16, 28, 29, 31) zumindest teilweise beherbergt und sich zumindest teilweise in einem Zwickel (21a, 21b, 21c, 21d) befindet, der zwischen dem Mantel (3) und dem kleinstmöglichen, den Mantel (3) umschreibenden, gedachten Quader (22) eingeschlossen ist,
wobei der Gurt (10) im festgespannten Zustand des Tanks (2) über das Gehäuse (18, 27) geführt ist.

2. Tanksystem nach Anspruch 1, **dadurch gekennzeichnet, dass** das Gehäuse eine Abdeckung (18) ist.

3. Tanksystem nach Anspruch 1, **dadurch gekennzeichnet, dass** das Gehäuse ein Ventilblock (27) ist.

4. Tanksystem nach einem der Ansprüche 1 bis 3, **dadurch gekennzeichnet, dass** der genannte Zwickel (21a, 21b) jener Seite des Tanks (2) abgewandt ist, die zur Montage an der Tragkonsole (6, 7) ausgebildet ist.

5. Tanksystem nach einem der Ansprüche 1 bis 4, **dadurch gekennzeichnet, dass** der genannte Zwickel (21a, 21d) in der Montagestellung der Vorrichtung (1) auf der Oberseite des Tanks (2) liegt.

6. Tanksystem nach einem der Ansprüche 1 bis 5, **dadurch gekennzeichnet, dass** zumindest eine Armatur (15, 16, 28, 29, 31) durch eine Öffnung (19, 20) in dem Gehäuse (18, 27) zugänglich ist.

7. Tanksystem nach einem der Ansprüche 1 bis 6, **dadurch gekennzeichnet, dass** das Gehäuse (18, 27), gesehen in Richtung der Mantelachse (A), eine sichelförmige oder abgerundet L-förmige Kontur hat.

8. Tanksystem nach einem der Ansprüche 1 bis 7 in Verbindung mit Anspruch 2, **dadurch gekennzeichnet, dass** sich zumindest eine Stützeinrichtung (25) zwischen dem Mantel (3) und der Abdeckung (18) befindet.

9. Tanksystem nach Anspruch 8, **dadurch gekennzeichnet, dass** die Stützeinrichtung (25) an einer Seite an die Krümmung des Mantels (3) und an der anderen Seite an die Krümmung der Abdeckung (18) angepasst ist.

10. Tanksystem nach Anspruch 8 oder 9, **dadurch gekennzeichnet, dass** sich die Stützeinrichtung (25) in einem Bereich befindet, über den der Gurt (10) im festgespannten Zustand des Tanks (2) geführt ist.

11. Tanksystem nach einem der Ansprüche 8 bis 10, **dadurch gekennzeichnet, dass** die Stützeinrichtung (25) mit zumindest einer Durchführung (26) ausgestattet ist.

12. Tanksystem nach einem der Ansprüche 8 bis 11, **dadurch gekennzeichnet, dass** die Stützeinrichtung (25) ein Ventilblock (27) ist.

## Claims

1. Tank system for a vehicle, comprising
a tank (2) for operating media, which has a generally cylindrical mantle (3) having a mantle axis (A), and
at least one support console (6, 7), which can be mounted on the vehicle and on which the tank can be lashed by means of a belt (10), **characterized by**
a housing (18, 27) which at least partially houses at least one armature (15, 16, 28, 29, 31) connected to the tank (2) and which is at least partially located in a gusset (21a, 21b, 21c, 21d) that is enclosed between the mantle (3) and the smallest possible imaginary cuboid that circumscribes the mantle (3),
wherein the belt (10), in the lashed position of the tank (2), is led over the housing (18, 27).

2. Tank system according to claim 1, **characterized in that** the housing is a cover (18).

3. Tank system according to claim 1, **characterized in that** the housing is a valve block (27).

4. Tank system according to any one of the claims 1 to 3, **characterized in that** said gusset (21a, 21b) faces away from that side of the tank (2) which is configured to be mounted on the support console (6, 7).

5. Tank system according to any one of the claims 1 to 4, **characterized in that** said gusset (21a, 21d), in the mounting position of the apparatus (1), lies on the top side of the tank (2).

6. Tank system according to any one of the claims 1 to 5, **characterized in that** at least one armature (15, 16, 28, 29, 31) is accessibly through an opening (19, 20) in the housing (18, 27).

7. Tank system according to any one of the claims 1 to 6, **characterized in that** the housing (18, 27), when seen in the direction of the mantle axis (A), has a contour in the form of a sickle or a rounded L.

8. Tank system according to any one of the claims 1 to 7 in connection with claim 2, **characterized in that** at least one support (25) is located between the mantle (3) and the cover (18) .

9. Tank system according to claim 8, **characterized in that** the support (25) is on one side adapted to the curvature of the mantle (3) and on the other side to the curvature of the cover (18).

10. Tank system according to claim 8 or 9, **characterized in that** the support (25) is located in an area over which the belt (10) is led in the lashed position of the tank (2).

11. Tank system according to any one of the claims 8 to 10, **characterized in that** the support (25) is provided with at least one passage (26).

12. Tank system according to any one of the claims 8 to 11, **characterized in that** the support (25) is a valve block (27) .

## Revendications

1. Système de réservoir pour un véhicule, comprenant
un réservoir (2) pour des matières consommables, qui présente une enveloppe (3) généralement cylindrique avec un axe d'enveloppe (A), et
au moins une console de support (6, 7), pouvant être montée sur le véhicule, sur laquelle le réservoir (2) peut être tendu de manière fixe au moyen d'une sangle (10), **caractérisé par**
un boîtier (18, 27), qui abrite au moins partiellement une armature (15, 16, 28, 29, 31) raccordée au réservoir (2) et qui se trouve au moins partiellement dans un gousset (21a, 21b, 21c, 21d), qui est inclus entre l'enveloppe (3) et le parallélépipède (22) imaginaire le plus petit possible entourant l'enveloppe (3),
où la sangle (10) à l'état tendue du réservoir (3) passe par-dessus le boîtier (18, 27).

2. Système de réservoir selon la revendication 1, **caractérisé en ce que** le boîtier est une couverture (18).

3. Système de réservoir selon la revendication 1, **caractérisé en ce que** le boîtier est un bloc de soupape (27).

4. Système de réservoir selon l'une des revendications 1 à 3, **caractérisé en ce que** ledit gousset (21a, 21b) est opposé au côté du réservoir (2) qui est conçu pour le montage sur la console de support (6, 7).

5. Système de réservoir selon l'une des revendications 1 à 4, **caractérisé en ce que** ledit gousset (21a, 21b) se situe dans la position de montage du dispositif (1) sur le côté supérieur du réservoir (2).

6. Système de réservoir selon l'une des revendications 1 à 5, **caractérisé en ce qu'**au moins une armature (15, 16, 28, 29, 31) est accessible par une ouverture (19, 20) dans le boîtier (18, 27).

7. Système de réservoir selon l'une des revendications 1 à 6, **caractérisé en ce que** le boîtier (18, 27), vu dans la direction de l'axe de l'enveloppe (A), a un contour en forme de faucille ou en forme de L arrondi.

8. Système de réservoir selon l'une des revendications 1 à 7 en combination avec la revendication 2, **caractérisé en ce qu'**au moins un dispositif de support (25) se trouve entre l'enveloppe (3) et la couverture (18).

9. Système de réservoir selon la revendication 8, **caractérisé en ce que** le dispositif de support (25) est ajusté sur un côté à la courbure de l'enveloppe (3) et sur l'autre côté à la courbure de la couverture (18).

10. Système de réservoir selon la revendication 8 ou 9, **caractérisé en ce que** le dispositif de support (25) est situé dans une zone au dessus de laquelle passe la sangle (10) à l'état tendue du réservoir (2).

11. Système de réservoir selon l'une des revendications 8 à 10, **caractérisé en ce que** le dispositif de support (25) est équipé avec au moins un passage (26).

12. Système de réservoir selon l'une des revendications 8 à 11, **caractérisé en ce que** le dispositif de support (25) est un bloc de soupape (27).
